# FASCICULE DE BREVET EUROPEEN

(11) **EP 1 496 414 B1**
(45) Date de publication et mention de la délivrance du brevet: **26.04.2017**
(21) Numéro de dépôt: 04291556.1
(22) Date de dépôt: 21.06.2004
(51) Int. Cl.: G05D 1/00, G05B 9/03, G01D 3/08

(54) **Procédé et dispositif pour surveiller la validité d'au moins un paramètre qui est calculé par une centrale anémométrique d'un aéronef**
Vorrichtung und Verfahren zur Überwachung der Gültigkeit mindestens eines von einer Windmesserzentrale eines Luftfahrzeuges berechneten Parameters
Device and method for controlling the validity of at least one parameter calculated by an aircraft anemometer station

(30) Priorité: 07.07.2003 FR 0308269
(43) Date de publication de la demande: 12.01.2005
(73) Titulaire: AIRBUS OPERATIONS (SAS), 31060 Toulouse (FR)
(72) Inventeur: D'Ouince, Arnaud, 31300 Toulouse (FR); Andreoletti, Rémi, 31500 Toulouse (FR)
(74) Mandataire: Gevers & Orès

(56) Documents cités:
- EP-B- 0 244 344
- US-A- 5 648 604
- US-B1- 6 285 298

## Description

La présente invention concerne un procédé et un dispositif pour surveiller la validité d'au moins un paramètre qui est calculé par une centrale anémométrique d'un aéronef. Les documents EP0244344 B1, US5648604 A et US6285298B1 montrent des procédés différents pour surveiller la validité de certains paramètres de vol.

Les paramètres qui sont susceptibles d'être surveillés dans le cadre de la présente invention et qui sont calculés par une centrale anémométrique sont notamment la pression totale Pt, la pression statique Ps et la température totale TAT, qui sont des paramètres importants pour le pilotage de l'aéronef. Pour être valables, ces paramètres Pt, Ps, TAT doivent présenter au moins un niveau de fiabilité prédéterminé.

On sait que la plupart des avions actuels comportent au moins une centrale anémométrique permettant de déterminer les valeurs de données telles que l'altitude de l'aéronef ou sa vitesse, qui sont utilisées lors du pilotage. Pour des raisons de sûreté de fonctionnement, les avions comportent généralement deux ou trois centrales anémométriques. Afin de calculer les paramètres précités, chaque centrale anémométrique acquiert des informations provenant d'un ou plusieurs capteurs de pression. De façon usuelle, chacun desdits capteurs de pression est situé à l'intérieur du fuselage de l'avion et est relié par un tube à une sonde disposée de façon traversante à la surface dudit fuselage. Généralement, ce tube est relié au capteur de pression associé au moyen d'un connecteur pneumatique permettant de le déconnecter et de le reconnecter facilement.

On sait que des erreurs humaines, notamment lors d'opérations de maintenance de l'avion, peuvent entraîner la défaillance d'un ou plusieurs des capteurs de pression d'une telle centrale anémométrique.

Par exemple, les personnels chargés d'effectuer une opération de lavage de l'avion collent fréquemment un morceau de ruban adhésif sur chacune des sondes de la centrale anémométrique, afin d'éviter que de l'eau pénètre dans le tube lors dudit lavage. S'ils oublient d'enlever l'un desdits morceaux de ruban adhésif après le lavage, le capteur de pression correspondant sera défaillant lors du vol suivant de l'avion, puisqu'il ne pourra pas mesurer la pression de l'air extérieur au fuselage. Il mesurera en fait la pression de l'air dans le tube qui est fermé, à son extrémité du côté de la sonde, par le morceau de ruban adhésif.

Un autre exemple de défaillance concerne le cas où des personnels de maintenance déconnectent le tube et le capteur de pression au niveau d'un connecteur approprié, par exemple pour nettoyer l'intérieur de ce tube. S'ils oublient de reconnecter le tube sur le capteur de pression après avoir réalisé l'opération de maintenance, ledit capteur de pression sera aussi défaillant, puisqu'il mesurera la pression de l'air à l'intérieur du fuselage au lieu de mesurer la pression de l'air extérieur au fuselage.

Un autre cas de défaillance d'un capteur de pression, pouvant survenir lors du vol de l'aéronef, concerne le cas du givrage desdites sondes (par exemple le tube de "Pitot") qui peut empêcher le bon fonctionnement dudit capteur de pression. Aucune solution connue ne permet de détecter le défaut de validité d'un paramètre précité de l'aéronef, consécutif à cette dernière défaillance.

La présente invention a pour objet de remédier à ces inconvénients. Elle concerne un procédé pour surveiller la validité d'au moins un paramètre qui est calculé par une centrale anémométrique d'un aéronef et détecter, de façon rapide et fiable, et à coût réduit, toute anomalie d'un tel paramètre.

A cet effet, ledit procédé est remarquable, selon l'invention, en ce que :
a) on prend en compte un nombre n de premières informations dépendant chacune dudit paramètre que l'on surveille, n étant un entier supérieur ou égal à 1 ;
b) on prend en compte une pluralité de p secondes informations, p étant un entier supérieur ou égal à 2, chacune desdites p secondes informations étant du type de l'une desdites n premières informations et dépendant d'au moins une valeur issue d'au moins une source d'informations qui est externe à ladite centrale anémométrique, les différentes sources d'informations étant de plus distinctes les unes des autres ;
c) pour chacune desdites p secondes informations, on calcule un écart entre cette seconde information et une première information de même type ;
d) on compare la valeur absolue de chacun des écarts ainsi calculés à une valeur de seuil prédéterminée, dépendant à chaque fois du type correspondant des première et seconde informations dudit écart ; et
e) on déduit desdites comparaisons :
   - que ledit paramètre n'est pas valable, si les valeurs absolues d'au moins deux desdits différents écarts sont supérieures aux valeurs de seuil prédéterminées correspondantes ; et
   - que ledit paramètre est valable, sinon.

Ainsi, grâce à l'invention, on est en mesure de détecter, de façon rapide et fiable, toute anomalie (ou non validité) d'un paramètre calculé par une centrale anémométrique.

La présente invention permet donc de surveiller au moins un paramètre Pt, Ps et/ou TAT d'une centrale anémométrique d'un aéronef, nécessitant un niveau de fiabilité élevé, à partir de valeurs provenant de sources d'informations externes à ladite centrale anémométrique et dont le niveau de fiabilité peut être plus réduit que celui du paramètre surveillé, en raison de l'utilisation d'au moins deux sources d'informations externes distinctes.

Selon l'invention :
- lesdites premières informations peuvent être calculées à partir du paramètre que l'on surveille ou tout simplement correspondre à ce paramètre ; et
- lesdites secondes informations peuvent être calculées à partir de la valeur issue d'une source d'informations externe ou tout simplement correspondre à cette valeur.

De façon avantageuse, lorsque l'on surveille au moins deux paramètres simultanément, au moins l'une desdites premières informations dépend simultanément desdits deux paramètres.

Dans un mode de réalisation préféré, lesdites premières informations comportent au moins l'une des informations suivantes :
- une altitude barométrique qui est calculée à partir de la pression statique que l'on surveille ; et
- une vitesse de l'aéronef par rapport à l'air, qui est calculée à partir des pressions statique et totale que l'on surveille.

En outre, avantageusement, au moins l'une desdites secondes informations qui dépendent de valeurs issues de sources d'informations externes à la centrale anémométrique, correspond à au moins l'une des valeurs suivantes :
- une valeur d'altitude fournie par un système de positionnement par satellites ;
- une valeur de pression totale mesurée par une sonde associée à au moins un moteur de l'aéronef ;
- une valeur de pression statique mesurée par une sonde associée à au moins un moteur de l'aéronef ;
- une valeur de température totale mesurée par une sonde associée à au moins un moteur de l'aéronef ;
- une valeur de vitesse fournie par un moyen d'estimation de vitesse ;
- une valeur de pression statique mesurée par une sonde multifonctions ;
- une valeur de pression statique mesurée par un instrument de secours ; et
- une valeur de pression totale mesurée par un instrument de secours.

De façon avantageuse, pour surveiller la pression statique calculée par la centrale anémométrique, on calcule à l'étape c) les écarts suivants :
- l'écart entre une altitude barométrique calculée à partir de ladite pression statique surveillée et une valeur d'altitude fournie par un système de positionnement par satellites ;
- l'écart entre une altitude barométrique calculée à partir de ladite pression statique surveillée et une altitude calculée à partir d'une valeur de pression statique mesurée par un instrument de secours ;
- l'écart entre ladite pression statique surveillée et une valeur de pression statique mesurée par une sonde associée à un moteur de l'aéronef ;
- l'écart entre ladite pression statique surveillée et une valeur de pression statique mesurée par une sonde multifonctions ; et
- l'écart entre une vitesse de l'aéronef par rapport à l'air, calculée à partir de ladite pression statique surveillée, et une valeur de vitesse fournie par un moyen d'estimation de vitesse.

De plus, avantageusement, pour surveiller la pression totale calculée par la centrale anémométrique, on calcule à l'étape c) les écarts suivants :
- l'écart entre ladite pression totale surveillée et une valeur de pression totale mesurée par une sonde associée à un moteur de l'aéronef ;
- l'écart entre une vitesse de l'aéronef par rapport à l'air, calculée à partir de ladite pression totale surveillée, et une valeur de vitesse fournie par un moyen d'estimation de vitesse ; et
- l'écart entre une vitesse de l'aéronef par rapport à l'air, calculée à partir de ladite pression totale surveillée, et une vitesse calculée à partir d'une valeur de pression totale mesurée par un instrument de secours.

En outre, de façon avantageuse, pour surveiller la température totale calculée par la centrale anémométrique, on calcule à l'étape c) les écarts suivants :
- l'écart entre une altitude barométrique corrigée à l'aide de ladite température totale surveillée et une valeur d'altitude fournie par un système de positionnement par satellites ;
- l'écart entre ladite température totale surveillée et une valeur de température totale mesurée par une sonde associée à un moteur de l'aéronef ; et
- l'écart entre une vitesse de l'aéronef par rapport à l'air, calculée à partir de ladite température totale surveillée, et une valeur de vitesse fournie par un moyen d'estimation de vitesse.

Dans un mode de réalisation particulier appliqué à un aéronef muni de q moteurs, q étant un entier supérieur ou égal à 3, on prend en compte les valeurs mesurées par des sondes associées auxdits q moteurs, on calcule les écarts correspondants, et on considère un écart comme anormal, uniquement s'il est anormal par rapport aux valeurs mesurées relatives à au moins trois desdits q moteurs.

Ceci permet de ne pas considérer un paramètre surveillé comme non valable (écart anormal), de façon intempestive, dans le cas où une panne d'un des moteurs de l'aéronef entraînerait une panne de la ou des sondes associées à ce moteur.

Dans un autre mode de réalisation appliqué à un aéronef muni de deux moteurs, on prend en compte les valeurs mesurées par des sondes associées auxdits deux moteurs, on calcule les écarts correspondants, on considère à chaque fois les écarts par rapport aux valeurs mesurées relatives auxdits deux moteurs, et on ne prend plus en compte lesdits écarts en cas de panne de l'un desdits deux moteurs.

Par ailleurs, de façon avantageuse, on inhibe la surveillance de la validité dudit paramètre, lorsque l'aéronef se trouve dans au moins une phase de vol particulière, telle que le décollage ou l'atterrissage, ainsi que pendant la traversée de zones de turbulence. Ceci permet de rendre cette surveillance plus robuste, en évitant de considérer de façon intempestive un paramètre surveillé comme étant non valable.

La présente invention concerne également un dispositif pour surveiller la validité d'au moins un paramètre qui est calculé par une centrale anémométrique d'un aéronef, en particulier d'un avion de transport.

Selon l'invention, ledit dispositif est remarquable en ce qu'il comporte :
- des moyens pour prendre en compte au moins un nombre n de premières informations dépendant chacune dudit paramètre que l'on surveille, n étant un entier supérieur ou égal à 1 ;
- des moyens pour prendre en compte une pluralité de p secondes informations, p étant un entier supérieur ou égal à 2, chacune desdites p secondes informations étant du type de l'une desdites n premières informations et dépendant d'au moins une valeur issue d'au moins une source d'informations qui est externe à ladite centrale anémométrique, lesdites sources d'informations étant de plus distinctes les unes des autres ;
- des moyens pour calculer, pour chacune desdites p secondes informations, un écart entre cette seconde information et une première information de même type ;
- des moyens pour comparer la valeur absolue de chacun des écarts ainsi calculés à une valeur de seuil prédéterminée, dépendant du type correspondant des informations dudit écart ; et
- des moyens pour déduire desdites comparaisons :
   - que ledit paramètre n'est pas valable, si les valeurs absolues d'au moins deux desdits différents écarts sont supérieures aux valeurs de seuil prédéterminées correspondantes ; et
   - que ledit paramètre est valable, sinon.

Les figures du dessin annexé feront bien comprendre comment l'invention peut être réalisée. Sur ces figures, des références identiques désignent des éléments semblables.
La figure 1 illustre schématiquement un système conforme à l'invention, appliqué à un avion représenté partiellement.
La figure 2 est le schéma synoptique d'un système conforme à l'invention.

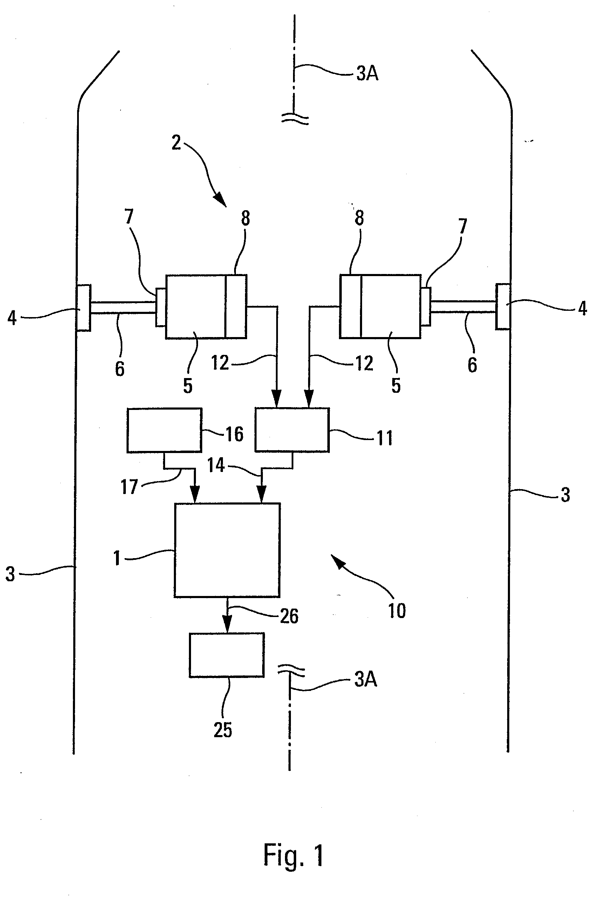

Le dispositif 1 conforme à l'invention et représenté schématiquement sur la figure 1 est destiné à la surveillance d'une centrale anémométrique 2 usuelle d'un aéronef, en particulier d'un avion de transport civil, dont on a uniquement représenté une partie du fuselage 3 d'axe longitudinal 3A sur cette figure 1 pour des raisons de simplification du dessin.

On sait qu'une telle centrale anémométrique 2 est destinée à calculer des paramètres permettant de déterminer les valeurs de données telles que l'altitude, la vitesse, ... de l'aéronef. Pour ce faire, ladite centrale anémométrique 2 comporte, de façon connue :
- des sondes 4 qui sont montées, de façon traversante, sur le fuselage 3 de l'aéronef et accèdent à l'extérieur ;
- des capteurs de pression 5 qui sont reliés chacun par l'intermédiaire d'un tube 6 à une sonde 4. Généralement, un tel tube 6 qui réalise une liaison pneumatique est connecté au capteur de pression 5 associé au moyen d'un connecteur pneumatique 7 qui permet de le déconnecter et le reconnecter facilement et rapidement. De plus, à chaque capteur de pression 5 est associé un convertisseur analogique/numérique 8 ; et
- une unité centrale 11 qui est reliée aux capteurs de pression 5 par des liaisons électriques 12, par exemple sous forme d'un bus de communication au standard "ARINC 429".

Il est toutefois également envisageable d'intégrer les capteurs de pression 5 dans l'unité centrale 11.

Généralement, un avion de transport civil comporte deux ou trois centrales anémométriques 2 du type décrit précédemment.

Le dispositif 1 conforme à l'invention qui fait partie d'un système de surveillance 10 précisé ci-dessous (ainsi que ladite centrale anémométrique 2), a pour objet de surveiller la validité d'au moins un paramètre usuel, tel que la pression statique Ps, la pression totale Pt ou la température totale TAT, qui est calculé par l'unité centrale 11 de ladite centrale anémométrique 2.

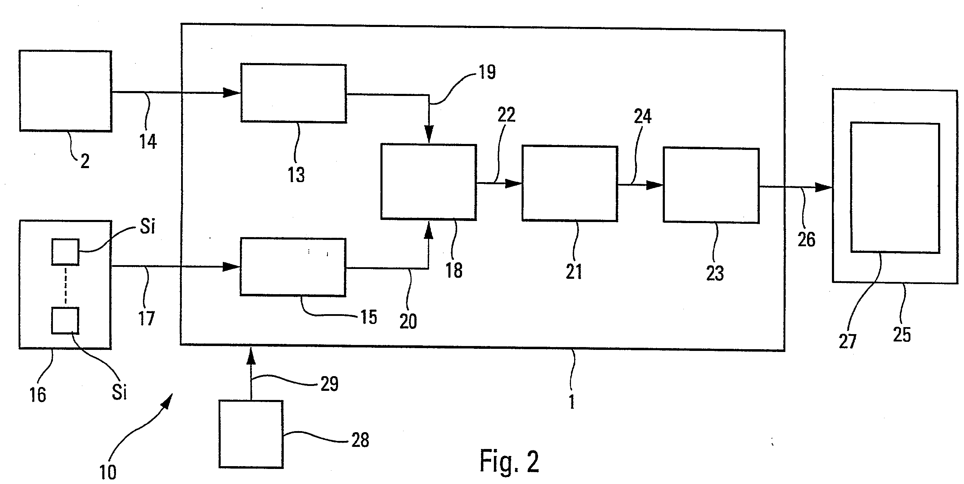

A cet effet, ledit dispositif 1 comporte, comme représenté sur la figure 2 :
- des moyens 13 qui sont reliés par une liaison 14 à la centrale anémométrique 2 et qui sont destinés à former au moins un nombre n de premières informations dépendant chacune dudit paramètre Ps, Pt, TAT que l'on surveille et reçues de ladite centrale anémométrique 2, n étant un entier supérieur ou égal à 1. Certaines desdites premières informations peuvent être calculées à partir du paramètre que l'on surveille, par les moyens 13 (qui sont alors des moyens d'acquisition de données et de calcul). D'autres desdites premières informations peuvent correspondre au paramètre lui-même reçu par lesdits moyens 13 (qui sont alors simplement des moyens d'acquisition de données) ;
- des moyens 15 pour former une pluralité de p secondes informations, p étant un entier supérieur ou égal à 2. Chacune desdites p secondes informations est du type de l'une desdites n premières informations et dépend d'au moins une valeur issue d'au moins une source d'informations Si qui est externe à ladite centrale anémométrique 2. Lesdites sources d'informations Si qui sont distinctes les unes des autres, sont regroupées sous un ensemble 16 de sources d'informations qui est relié par une liaison 17 auxdits moyens 15. Lesdites secondes informations peuvent être calculées à partir de la valeur issue d'une source d'informations Si externe ou tout simplement correspondre à cette valeur ;
- des moyens 18 qui sont reliés par des liaisons 19 et 20 respectivement auxdits moyens 13 et 15, pour calculer, pour chacune desdites p secondes informations, un écart entre cette seconde information et une première information de même type. Dans le cadre de la présente invention, deux informations sont considérées comme étant du même type lorsque leurs valeurs concernent la même grandeur (vitesse, altitude, ...) et sont exprimées dans la même unité, par exemple deux vitesses exprimées en noeuds ou en km/h, ou deux altitudes exprimées en pieds ;
- des moyens 21 qui sont reliés par une liaison 22 auxdits moyens 18, pour comparer la valeur absolue de chacun des écarts calculés par lesdits moyens 18 à une valeur de seuil prédéterminée, dépendant du type dudit écart ; et
- des moyens 23 qui sont reliés par une liaison 24 auxdits moyens 21, pour déduire desdites comparaisons :
   - que ledit paramètre surveillé Ps, Pt, TAT n'est pas valable, si les valeurs absolues d'au moins deux desdits écarts sont supérieures aux valeurs de seuil prédéterminées correspondantes (c'est-à-dire si au moins deux écarts sont anormaux) ; et
   - que ledit paramètre est valable, sinon (c'est-à-dire si aucun écart n'est anormal ou uniquement un seul l'est).

Le système de surveillance 10 conforme à l'invention, comporte :
- ledit dispositif de surveillance 1 ;
- ladite centrale anémométrique 2 ; et
- ledit ensemble 16 de sources d'informations Si.

Ledit système de surveillance 10 comporte, de plus, un moyen d'affichage 25 qui est relié par une liaison 26 aux moyens 23 et qui est susceptible d'afficher, le cas échéant, sur au moins un dispositif de visualisation, notamment un écran de visualisation usuel 27, monté par exemple dans le poste de pilotage de l'aéronef, une information indiquant une anomalie (ou une non validité) d'un paramètre (Ps, Pt, TAT) calculé par la centrale anémométrique 2.

Le dispositif 1 (ou le système 10) conforme à l'invention est donc en mesure de détecter, de façon rapide et fiable, toute anomalie d'un paramètre calculé par la centrale anémométrique 2. Il permet donc de surveiller au moins un paramètre Pt, Ps et/ou TAT de la centrale anémométrique 2 de l'aéronef, nécessitant un niveau de fiabilité élevé, à partir de valeurs qui proviennent desdites sources d'informations Si externes à ladite centrale anémométrique 2, et dont le niveau de fiabilité peut être plus réduit que celui du paramètre surveillé, en raison de l'utilisation d'au moins deux sources d'informations Si externes distinctes.

Dans un mode de réalisation particulier, lesdites premières informations prises en compte par les moyens 13 sont, outre les paramètres Ps, Pt et TAT (surveillés) eux-mêmes, les informations suivantes :
- une altitude barométrique calculée, de façon connue, à partir de la valeur de la pression statique Ps surveillée, cette altitude barométrique pouvant être corrigée à l'aide de la valeur de la température totale TAT surveillée ;
- une vitesse de l'aéronef par rapport à l'air, calculée de façon connue à l'aide des valeurs des pressions Ps et Pt surveillées.

Par ailleurs, dans un mode de réalisation particulier, lesdits moyens 15 prennent en compte les secondes informations suivantes, obtenues à partir dudit ensemble 16 de sources d'informations Si usuelles :
- une valeur d'altitude fournie par un système de positionnement par satellites, notamment le système GPS ("Global Positioning System") ;
- une valeur de pression totale Pt mesurée par une sonde associée à au moins un moteur de l'aéronef ;
- une valeur de pression statique Ps mesurée par une sonde associée à au moins un moteur de l'aéronef ;
- une valeur de température totale TAT mesurée par une sonde associée à au moins un moteur de l'aéronef ;
- une valeur de vitesse fournie par un moyen d'estimation de vitesse ;
- une valeur de pression statique Ps mesurée par une sonde multifonctions ;
- une valeur de pression statique Ps mesurée par un instrument de secours ; et
- une valeur de pression totale Pt mesurée par un instrument de secours.

Les sources d'informations précédentes (système de positionnement par satellites, sondes associées aux moteurs, moyen d'estimation de vitesse, sonde multifonctions, instruments de secours, ...) sont des sources usuelles et font partie dudit ensemble 16. Un instrument de secours peut par exemple être tel que celui décrit dans la demande de brevet FR-2 784 457.

Dans un mode de réalisation préféré, pour surveiller la pression statique Ps calculée par la centrale anémométrique 2, lesdits moyens 18 calculent les écarts suivants :
- l'écart entre une altitude barométrique calculée à partir de ladite pression statique Ps et une valeur d'altitude fournie par un système de positionnement par satellites ;
- l'écart entre une altitude barométrique calculée à partir de ladite pression statique Ps et une altitude calculée à partir d'une valeur de pression statique mesurée par un instrument de secours ;
- l'écart entre ladite pression statique Ps et une valeur de pression statique mesurée par une sonde associée à un moteur de l'aéronef ;
- l'écart entre ladite pression statique Ps et une valeur de pression statique mesurée par une sonde multifonctions ; et
- l'écart entre une vitesse de l'aéronef par rapport à l'air, calculée à partir de ladite pression statique Ps, et une valeur de vitesse fournie par un moyen d'estimation de vitesse.

En outre, pour surveiller la pression totale Pt calculée par la centrale anémométrique 2, lesdits moyens 18 calculent les écarts suivants :
- l'écart entre ladite pression totale Pt et une valeur de pression totale mesurée par une sonde associée à un moteur de l'aéronef ;
- l'écart entre une vitesse de l'aéronef par rapport à l'air, calculée à partir de ladite pression totale Pt, et une valeur de vitesse fournie par un moyen d'estimation de vitesse ; et
- l'écart entre une vitesse de l'aéronef par rapport à l'air, calculée à partir de ladite pression totale Pt, et une vitesse calculée à partir d'une valeur de pression totale mesurée par un instrument de secours.

Par ailleurs, pour surveiller la température totale TAT calculée par la centrale anémométrique 2, lesdits moyens 18 calculent les écarts suivants :
- l'écart entre une altitude barométrique corrigée à l'aide de ladite température totale TAT et une valeur d'altitude fournie par un système de positionnement par satellites ;
- l'écart entre ladite température totale TAT et une valeur de température totale mesurée par une sonde associée à un moteur de l'aéronef ; et
- l'écart entre une vitesse de l'aéronef par rapport à l'air, calculée à partir de ladite température totale TAT, et une valeur de vitesse fournie par un moyen d'estimation de vitesse.

Si l'un ou plusieurs des écarts précédents ne peuvent pas être calculés du fait qu'au moins l'une desdites secondes informations (par exemple l'altitude GPS) n'est pas disponible ou n'est pas considérée comme valable, la surveillance desdits paramètres, conforme à l'invention, peut encore être mise en oeuvre, pour un paramètre surveillé Ps, Pt, TAT, tant que les écarts pris en compte pour la surveillance de ce paramètre Ps, Pt, TAT et pouvant encore être calculés, sont calculés à partir de secondes informations provenant d'au moins deux sources externes Si distinctes.

Dans un mode de réalisation particulier appliqué à un aéronef muni de g moteurs, q étant un entier supérieur ou égal à 3, on prend en compte les valeurs mesurées par des sondes associées auxdits q moteurs et on calcule les écarts correspondants. On considère alors un écart comme anormal, uniquement s'il est anormal par rapport aux valeurs mesurées relatives à au moins trois desdits q moteurs.

Ceci permet de ne pas considérer un paramètre surveillé comme non valable (écart anormal), de façon intempestive, dans le cas où une panne d'un des moteurs de l'aéronef entraînerait une panne de la ou des sondes associées à ce moteur.

Dans un autre mode de réalisation appliqué à un aéronef muni de deux moteurs, on prend en compte les valeurs mesurées par des sondes associées auxdits deux moteurs et on calcule les écarts correspondants. On considère alors les écarts par rapport aux valeurs mesurées relatives aux deux moteurs, et on ne prend plus en compte lesdits écarts en cas de panne de l'un desdits moteurs, car il n'y a alors plus redondance des mesures en raison de ladite panne.

Dans un mode de réalisation particulier, représenté sur la figure 2, ledit système 10 comporte, de plus, un moyen d'inhibition 28, manuel ou automatique, qui est relié par une liaison 29 au dispositif 1 et qui est destiné à inhiber la surveillance de la validité du ou des paramètres surveillés, lorsque l'aéronef se trouve dans au moins une phase de vol particulière telle que le décollage ou l'atterrissage, ainsi que pendant la traversée de zones de turbulence. Ceci permet de rendre cette surveillance plus robuste, en évitant de considérer de façon intempestive un paramètre surveillé comme étant non valable.

## Revendications

1. Procédé pour surveiller la validité d'au moins un paramètre qui est calculé par une centrale anémométrique (2) d'un aéronef, ledit procédé permettant de surveiller au moins l'un des paramètres suivants, calculés par la centrale anémométrique (2) : la pression totale, la pression statique, et la température totale, procédé selon lequel :
a) on prend en compte un nombre n de premières informations dépendant chacune dudit paramètre que l'on surveille, n étant un entier supérieur ou égal à 1 ;
b) on prend en compte une pluralité de p secondes informations, p étant un entier supérieur ou égal à 2, chacune desdites p secondes informations étant du type de l'une desdites n premières informations et dépendant d'au moins une valeur issue d'au moins une source d'informations (Si) qui est externe à ladite centrale anémométrique (2), les différentes sources d'informations (Si) étant de plus distinctes les unes des autres ;
c) pour chacune desdites p secondes informations, on calcule un écart entre cette seconde information et une première information de même type, deux informations étant du même type lorsqu'elles concernent une même grandeur et sont exprimées dans une même unité ;
d) on compare la valeur absolue de chacun des écarts ainsi calculés à une valeur de seuil prédéterminée dépendant à chaque fois du type correspondant des informations dudit écart ; et
e) on déduit desdites comparaisons :
. que ledit paramètre n'est pas valable, si les valeurs absolues d'au moins deux desdits différents écarts sont supérieures aux valeurs de seuil prédéterminées correspondantes ; et
. que ledit paramètre est valable, sinon.

2. Procédé de la revendication 1,
**caractérisé en ce qu'**au moins l'une desdites premières informations est calculée à partir du paramètre que l'on surveille.

3. Procédé selon l'une des revendications 1 et 2,
**caractérisé en ce qu'**au moins l'une desdites premières informations correspond au paramètre que l'on surveille.

4. Procédé selon l'une quelconque des revendications précédentes, **caractérisé en ce qu'**au moins l'une desdites secondes informations est calculée à partir de ladite valeur issue d'une source d'informations (Si).

5. Procédé selon l'une quelconque des revendications précédentes, **caractérisé en ce qu'**au moins l'une desdites secondes informations correspond à ladite valeur issue d'une source d'informations (Si).

6. Procédé selon l'une quelconque des revendications précédentes, **caractérisé en ce que**, lorsque l'on surveille au moins deux paramètres simultanément, au moins l'une desdites premières informations dépend simultanément desdits deux paramètres.

7. Procédé selon l'une quelconque des revendications précédentes, **caractérisé en ce que** lesdites premières informations comportent au moins l'une des informations suivantes :
- une altitude barométrique qui est calculée à partir de la pression statique que l'on surveille ; et
- une vitesse de l'aéronef par rapport à l'air, qui est calculée à partir des pressions statique et totale que l'on surveille.

8. Procédé selon l'une quelconque des revendications précédentes, **caractérisé en ce qu'**au moins l'une desdites secondes informations qui dépendent de valeurs issues de sources d'informations (Si) externes à la centrale anémométrique (2), correspond à au moins l'une des valeurs suivantes :
- une valeur d'altitude fournie par un système de positionnement par satellites ;
- une valeur de pression totale mesurée par une sonde associée à au moins un moteur de l'aéronef ;
- une valeur de pression statique mesurée par une sonde associée à au moins un moteur de l'aéronef ;
- une valeur de température totale mesurée par une sonde associée à au moins un moteur de l'aéronef ;
- une valeur de vitesse fournie par un moyen d'estimation de vitesse ;
- une valeur de pression statique mesurée par une sonde multifonctions ;
- une valeur de pression statique mesurée par un instrument de secours ; et
- une valeur de pression totale mesurée par un instrument de secours.

9. Procédé selon l'une quelconque des revendications précédentes, **caractérisé en ce que**, pour surveiller la pression statique calculée par la centrale anémométrique (2), on calcule à l'étape c) les écarts suivants :
- l'écart entre une altitude barométrique calculée à partir de ladite pression statique surveillée et une valeur d'altitude fournie par un système de positionnement par satellites ;
- l'écart entre une altitude barométrique calculée à partir de ladite pression statique surveillée et une altitude calculée à partir d'une valeur de pression statique mesurée par un instrument de secours ;
- l'écart entre ladite pression statique surveillée et une valeur de pression statique mesurée par une sonde associée à un moteur de l'aéronef ;
- l'écart entre ladite pression statique surveillée et une valeur de pression statique mesurée par une sonde multifonctions ; et
- l'écart entre une vitesse de l'aéronef par rapport à l'air, calculée à partir de ladite pression statique surveillée, et une valeur de vitesse fournie par un moyen d'estimation de vitesse.

10. Procédé selon l'une quelconque des revendications précédentes,
**caractérisé en ce que**, pour surveiller la pression totale calculée par la centrale anémométrique (2), on calcule à l'étape c) les écarts suivants :
- l'écart entre ladite pression totale surveillée et une valeur de pression totale mesurée par une sonde associée à un moteur de l'aéronef ;
- l'écart entre une vitesse de l'aéronef par rapport à l'air, calculée à partir de ladite pression totale surveillée, et une valeur de vitesse fournie par un moyen d'estimation de vitesse ; et
- l'écart entre une vitesse de l'aéronef par rapport à l'air, calculée à partir de ladite pression totale surveillée, et une vitesse calculée à partir d'une valeur de pression totale mesurée par un instrument de secours.

11. Procédé selon l'une quelconque des revendications précédentes,
**caractérisé en ce que**, pour surveiller la température totale calculée par la centrale anémométrique (2), on calcule à l'étape c) les écarts suivants :
- l'écart entre une altitude barométrique corrigée à l'aide de ladite température totale surveillée et une valeur d'altitude fournie par un système de positionnement par satellites ;
- l'écart entre ladite température totale surveillée et une valeur de température totale mesurée par une sonde associée à un moteur de l'aéronef ; et
- l'écart entre une vitesse de l'aéronef par rapport à l'air, calculée à partir de ladite température totale surveillée, et une valeur de vitesse fournie par un moyen d'estimation de vitesse.

12. Procédé selon l'une quelconque des revendications 1 à 11, pour un aéronef muni de q moteurs, q étant un entier supérieur ou égal à 3,
**caractérisé en ce que** l'on prend en compte les valeurs mesurées par des sondes associées auxdits q moteurs et on calcule les écarts correspondants, et **en ce que** l'on considère un écart comme anormal, uniquement s'il est anormal par rapport aux valeurs mesurées relatives à au moins trois desdits q moteurs.

13. Procédé selon l'une quelconque des revendications 1 à 11, pour un aéronef muni de deux moteurs,
**caractérisé en ce que** l'on prend en compte les valeurs mesurées par des sondes associées auxdits deux moteurs et on calcule les écarts correspondants, **en ce que** l'on considère à chaque fois les écarts par rapport aux valeurs mesurées relatives auxdits deux moteurs, et **en ce que** l'on ne prend plus en compte lesdits écarts en cas de panne de l'un desdits deux moteurs.

14. Procédé selon l'une quelconque des revendications précédentes,
**caractérisé en ce que** l'on inhibe automatiquement la surveillance de la validité dudit paramètre, lorsque l'aéronef se trouve dans au moins une phase de vol particulière.

15. Dispositif pour surveiller la validité d'au moins un paramètre qui est calculé par une centrale anémométrique (2) d'un aéronef, ledit dispositif (1) permettant de surveiller au moins l'un des paramètres suivants, calculés par la centrale anémométrique (2) : la pression totale, la pression statique et la température totale, ledit dispositif (1) comportant :
- des moyens (13) pour prendre en compte au moins un nombre n de premières informations dépendant chacune dudit paramètre que l'on surveille, n étant un entier supérieur ou égal à 1 ;
- des moyens (15) pour prendre en compte une pluralité de p secondes informations, p étant un entier supérieur ou égal à 2, chacune desdites p secondes informations étant du type de l'une desdites n premières informations et dépendant d'au moins une valeur issue d'au moins une source d'informations (Si) qui est externe à ladite centrale anémométrique (2), lesdites sources d'informations (Si) étant de plus distinctes les unes des autres ;
- des moyens (18) pour calculer, pour chacune desdites p secondes informations, un écart entre cette seconde information et une première information de même type, deux informations étant du même type lorsqu'elles concernent une même grandeur et sont exprimées dans une même unité ;
- des moyens (21) pour comparer la valeur absolue de chacun des écarts ainsi calculés à une valeur de seuil prédéterminée, dépendant du type correspondant des informations dudit écart ; et
- des moyens (23) pour déduire desdites comparaisons :
. que ledit paramètre n'est pas valable, si les valeurs absolues d'au moins deux desdits différents écarts sont supérieures aux valeurs de seuil prédéterminées correspondantes ; et
. que ledit paramètre est valable, sinon.

16. Dispositif selon la revendication 15,
**caractérisé en ce qu'**il comporte, de plus, un moyen d'inhibition (28) pour inhiber automatiquement la surveillance de la validité dudit paramètre, lorsque l'aéronef se trouve dans au moins une phase de vol particulière.

17. Système pour surveiller la validité d'au moins un paramètre qui est calculé par une centrale anémométrique (2) d'un aéronef,
**caractérisé en ce qu'**il comporte au moins :
- le dispositif (1) spécifié sous l'une des revendications 15 et 16 ;
- ladite centrale anémométrique (2) ; et
- ledit ensemble (16) de sources d'informations (Si) externes à ladite centrale anémométrique (2).

18. Aéronef,
**caractérisé en ce qu'**il comporte un dispositif (1) tel que celui spécifié sous l'une des revendications 15 et 16.

19. Aéronef,
**caractérisé en ce qu'**il comporte un système (10) tel que celui spécifié sous la revendication 17.

## Patentansprüche

1. Verfahren zum Überwachen der Gültigkeit mindestens eines von einer Windmesserzentrale (2) eines Luftfahrzeugs berechneten Parameters, wobei das Verfahren das Überwachen mindestens eines der folgenden Parameter, die von der Windmesserzentrale (2) berechnet werden, erlaubt: Gesamtdruck, statischer Druck und Gesamttemperatur, Verfahren gemäß dem:
a) man eine Anzahl n erster Informationen berücksichtigt, die jeweils von dem Parameter, den man überwacht, abhängen, wobei n eine Ganzzahl größer oder gleich 1 ist;
b) man eine Vielzahl p zweiter Informationen berücksichtigt, wobei p eine Ganzzahl größer oder gleich 2 ist, wobei jede der p zweiten Informationen des Typs einer der n ersten Informationen ist und von mindestens einem Wert abhängt, der aus mindestens einer Informationsquelle (Si) hervorgeht, die außerhalb der Windmesserzentrale (2) ist, wobei die verschiedenen Informationsquellen (Si) außerdem voneinander unterschiedlich sind;
c) man für jede der p zweiten Informationen einen Unterschied zwischen dieser zweiten Information und einer ersten Information desselben Typs berechnet, wobei zwei Informationen desselben Typs sind, wenn sie ein und dieselbe Größe betreffen und in ein und derselben Einheit ausgedrückt sind;
d) man den Absolutwert jedes der Unterschiede, die derart berechnet werden, mit einem vorbestimmten Schwellenwert vergleicht, der jeweils von dem entsprechenden Typ abhängt, der den Informationen des Unterschieds entspricht; und
e) man aus den Vergleichen Folgendes ableitet:
- dass der Parameter nicht gültig ist, falls die Absolutwerte von mindestens zwei der verschiedenen Unterschiede größer sind als die entsprechenden vorbestimmten Schwellenwerte; und
- dass der Parameter anderenfalls gültig ist.

2. Verfahren nach Anspruch 1,
**dadurch gekennzeichnet, dass** mindestens eine der ersten Informationen ausgehend von dem Parameter, den man überwacht, berechnet ist.

3. Verfahren nach einem der Ansprüche 1 und 2,
**dadurch gekennzeichnet, dass** mindestens eine der ersten Informationen dem Parameter, den man überwacht, entspricht.

4. Verfahren nach einem der vorhergehenden Ansprüche,
**dadurch gekennzeichnet, dass** mindestens eine der zweiten Informationen ausgehend von dem Wert berechnet wird, der aus einer Informationsquelle (Si) hervorgeht.

5. Verfahren nach einem der vorhergehenden Ansprüche,
**dadurch gekennzeichnet, dass** mindestens eine der zweiten Informationen dem Wert entspricht, der aus einer Informationsquelle (Si) hervorgeht.

6. Verfahren nach einem der vorhergehenden Ansprüche,
**dadurch gekennzeichnet, dass**, wenn man mindestens zwei Parameter gleichzeitig überwacht, mindestens eine der ersten Informationen gleichzeitig von den zwei Parametern abhängt.

7. Verfahren nach einem der vorhergehenden Ansprüche,
**dadurch gekennzeichnet, dass** die ersten Informationen mindestens eine der folgenden Informationen umfassen:
- eine barometrische Höhe, die ausgehend von dem statischen Druck, den man überwacht, berechnet wird; und
- eine Geschwindigkeit des Luftfahrzeugs in Bezug zu der Luft, die ausgehend von den statischen Drücken und dem Gesamtdruck, die man überwacht, berechnet wird.

8. Verfahren nach einem der vorhergehenden Ansprüche,
**dadurch gekennzeichnet, dass** mindestens eine der zweiten Informationen, die von Werten abhängen, die aus Informationsquellen (Si) außerhalb der Windmesserzentrale (2) hervorgehen, mindestens einem der folgenden Werte entspricht:
- einem Seehöhenwert, der von einem Satellitenpositionierungssystem geliefert wird;
- einem Gesamtdruckwert, der von einer Sonde gemessen wird, die zu mindestens einem Motor des Luftfahrzeugs gehört;
- einem Wert statischen Drucks, der von einer Sonde gemessen wird, die zu mindestens einem Motor des Luftfahrzeugs gehört;
- einem Gesamttemperaturwert, der von einer Sonde gemessen wird, die zu mindestens einem Motor des Luftfahrzeugs gehört;
- einem Geschwindigkeitswert, der von einem Geschwindigkeitsschätzungsmittel geliefert wird;
- einem Wert statischen Drucks, der von einer Multifunktionssonde gemessen wird;
- einem Wert statischen Drucks, der von einem Hilfsinstrument gemessen wird; und
- einem Gesamtdruckwert, der von einem Hilfsinstrument gemessen wird.

9. Verfahren nach einem der vorhergehenden Ansprüche,
**dadurch gekennzeichnet, dass** man zum Überwachen des statischen Drucks, der von der Windmesserzentrale (2) berechnet wird, bei Schritt c) die folgenden Unterschiede berechnet:
- den Unterschied zwischen einer barometrischen Höhe, die ausgehend von dem überwachten Wert statischen Drucks und einem Seehöhenwert, der von einem Satellitenpositionierungssystem geliefert wird, berechnet wird;
- den Unterschied zwischen einer barometrischen Höhe, die ausgehend von dem überwachten Wert statischen Drucks und einer Seehöhe, die ausgehend von einem Wert statischen Drucks, der von einem Hilfsinstrument berechnet wird, berechnet wird;
- den Unterschied zwischen dem überwachten statischen Druck und einem Wert statischen Drucks, der von einer Sonde, die zu einem Motor des Luftfahrzeugs gehört, gemessen wird;
- den Unterschied zwischen dem überwachten statischen Druck und einem Wert statischen Drucks, der von einer Multifunktionssonde berechnet wird; und
- den Unterschied zwischen einer Geschwindigkeit des Luftfahrzeugs in Bezug zu der Luft, die ausgehend von dem überwachten Wert statischen Drucks berechnet wird, und einem Geschwindigkeitswert, der von einem Geschwindigkeitsschätzungsmittel geliefert wird.

10. Verfahren nach einem der vorhergehenden Ansprüche,
**dadurch gekennzeichnet, dass** man zum Überwachen des Gesamtdrucks, der von der Windmesserzentrale (2) berechnet wird, bei Schritt c) die folgenden Unterschiede berechnet:
- den Unterschied zwischen dem überwachten Gesamtdruck und einem Gesamtdruckwert, der von einer Sonde gemessen wird, die zu einem Motor des Luftfahrzeugs gehört;
- den Unterschied zwischen einer Geschwindigkeit des Luftfahrzeugs in Bezug zu der Luft, die ausgehend von dem überwachten Gesamtdruck gemessen wird, und einem Geschwindigkeitswert, der von einem Geschwindigkeitsschätzungsmittel geliefert wird; und
- den Unterschied zwischen einer Geschwindigkeit des Luftfahrzeugs in Bezug zu der Luft, die ausgehend von dem überwachten Gesamtdruck gemessen wird, und einer Geschwindigkeit, die ausgehend von einem Gesamtdruckwert, der von einem Hilfsinstrument gemessen wird, berechnet wird.

11. Verfahren nach einem der vorhergehenden Ansprüche,
**dadurch gekennzeichnet, dass** man zum Überwachen der Gesamttemperatur, die von der Windmesserzentrale (2) berechnet wird, bei Schritt c) die folgenden Unterschiede berechnet:
- den Unterschied zwischen einer barometrischen Höhe, die mit Hilfe der überwachten Gesamttemperatur korrigiert ist, und einem Seehöhenwert, der von einem Satellitenpositionierungssystem geliefert wird;
- den Unterschied zwischen der überwachten Gesamttemperatur und einem Gesamttemperaturwert, der von einer Sonde gemessen wird, die zu einem Motor des Luftfahrzeugs gehört; und
- den Unterschied zwischen einer Geschwindigkeit des Luftfahrzeugs in Bezug zu der Luft, die ausgehend von der überwachten Gesamttemperatur berechnet wird, und einem Geschwindigkeitswert, der von einem Geschwindigkeitsschätzungsmittel geliefert wird.

12. Verfahren nach einem der Ansprüche 1 bis 11 für ein Luftfahrzeug, das mit q Motoren versehen ist, wobei q eine Ganzzahl größer oder gleich 3 ist,
**dadurch gekennzeichnet, dass** man die Werte berücksichtigt, die von den Sonden gemessen werden, die zu den q Motoren gehören, und man die entsprechenden Unterschiede berechnet, und dass man einen Unterschied nur als anormal betrachtet, falls er in Bezug zu den Werten anormal ist, die in Zusammenhang mit mindestens drei der q Motoren gemessen werden.

13. Verfahren nach einem der Ansprüche 1 bis 11 für ein Luftfahrzeug, das mit zwei Motoren versehen ist,
**dadurch gekennzeichnet, dass** man die Werte berücksichtigt, die von Sonden gemessen werden, die zu den zwei Motoren gehören, und man die entsprechenden Unterschiede berechnet, dass man jedes Mal die Unterschiede im Vergleich zu den Werten berücksichtigt, die in Zusammenhang mit den zwei Motoren gemessen werden, und dass man die Unterschiede im Fall einer Panne eines der zwei Motoren nicht mehr berücksichtigt.

14. Verfahren nach einem der vorhergehenden Ansprüche,
**dadurch gekennzeichnet, dass** man automatisch die Überwachung der Gültigkeit des Parameters inhibiert, wenn sich das Luftfahrzeug in mindestens einer besonderen Flugphase befindet.

15. Vorrichtung zum Überwachen der Gültigkeit mindestens eines von einer Windmesserzentrale (2) eines Luftfahrzeugs berechneten Parameters, wobei die Vorrichtung (1) das Überwachen mindestens eines der folgenden Parameter, die von der Windmesserzentrale (2) berechnet werden, erlaubt: Gesamtdruck, statischer Druck und Gesamttemperatur, wobei die Vorrichtung (1) Folgendes umfasst:
- Mittel (13) zum Berücksichtigen mindestens einer Anzahl n erster Informationen, die jeweils von dem Parameter, den man überwacht, abhängen, wobei n eine Ganzzahl größer oder gleich 1 ist;
- Mittel (15) zum Berücksichtigen einer Vielzahl p zweiter Informationen, wobei p eine Ganzzahl größer oder gleich 2 ist, wobei jede der p zweiten Informationen des Typs einer der n ersten Informationen ist und von mindestens einem Wert abhängt, der aus mindestens einer Informationsquelle (Si) hervorgeht, die außerhalb der Windmesserzentrale (2) ist, wobei die Informationsquellen (Si) außerdem voneinander unterschiedlich sind;
- Mittel (18), um für jede der p zweiten Informationen einen Unterschied zwischen dieser zweiten Information und einer ersten Information desselben Typs zu berechnen, wobei zwei Informationen desselben Typs sind, wenn sie ein und dieselbe Größe betreffen und in ein und derselben Einheit ausgedrückt sind;
- Mittel (21) zum Vergleichen des Absolutwerts jedes der derart berechneten Unterschiede mit einem vorbestimmten Schwellenwert, der von dem entsprechenden Typ der Informationen des Unterschieds abhängt; und
- Mittel (23), um Folgendes aus den Vergleichen abzuleiten:
-- dass der Parameter nicht gültig ist, falls die Absolutwerte von mindestens zwei der verschiedenen Unterschiede größer sind als die entsprechenden vorbestimmten Schwellenwerte; und
-- dass der Parameter anderenfalls gültig ist.

16. Vorrichtung nach Anspruch 15,
**dadurch gekennzeichnet, dass** sie außerdem ein Mittel zum Inhibieren (28) umfasst, um automatisch die Überwachung der Gültigkeit des Parameters zu inhibieren, wenn sich das Luftfahrzeug in mindestens einer besonderen Flugphase befindet.

17. System zum Überwachen der Gültigkeit mindestens eines Parameters, der von einer Windmesserzentrale (2) eines Luftfahrzeugs berechnet wird,
**dadurch gekennzeichnet, dass** es mindestens Folgendes umfasst:
- die Vorrichtung (1) gemäß einem der Ansprüche 15 und 16;
- die Windmesserzentrale (2); und
- die Einheit (16) von Informationsquellen (Si) außerhalb der Windmesserzentrale (2).

18. Luftfahrzeug,
**dadurch gekennzeichnet, dass** es eine Vorrichtung (1) wie die gemäß einem der Ansprüche 15 und 16 umfasst.

19. Luftfahrzeug,
**dadurch gekennzeichnet, dass** es ein System (10) wie das gemäß Anspruch 17 umfasst.

## Claims

1. A method for monitoring the validity of at least one parameter which is calculated by an anemometric unit (2) of an aircraft, said method allowing at least one of the following parameters calculated by the anemometric unit (2) to be monitored:
the total pressure, the static pressure, and the total temperature, said method wherein:
a) a number n of first data are taken into account, each dependent on said parameter which is being monitored, n being an integer greater than or equal to 1;
b) a plurality of p second data are taken into account, p being an integer greater than or equal to 2, each of said p second data being of the same type as one of said n first data and dependent on at least one value obtained from at least one data source (Si) which is external to said anemometric unit (2), the various data sources (Si) furthermore being separate from one another;
c) for each of said p second data, a difference is calculated between this second datum and a first datum of the same type, two data being of the same type if they relate to the same quantity and are expressed in the same units;
d) the absolute value of each of the differences calculated in this way is compared with a predetermined threshold value, in each case dependent on the data type corresponding to said difference; and
e) the following are deduced from said comparisons:
. that said parameter is invalid if the absolute values of at least two of said various differences are greater than the corresponding predetermined threshold values; and
. that said parameter is valid otherwise.

2. The method as of claim 1, wherein at least one of said first data is calculated from the parameter which is being monitored.

3. The method as claimed in claim 1, wherein at least one of said first data corresponds to the parameter which is being monitored.

4. The method as claimed in any of the preceding claims, wherein at least one of said second data is calculated from said value obtained from a data source (Si).

5. The method as claimed in any of the preceding claims, wherein at least one of said second data corresponds to said value obtained from a data source (Si).

6. The method as claimed in any of the preceding claims, wherein, when at least two parameters are being monitored simultaneously, at least one of said first data depends simultaneously on said two parameters.

7. The method as claimed in any of the preceding claims, wherein said first data include at least one of the following data:
- a barometric altitude, this being calculated from the static pressure which is being monitored; and
- a velocity of the aircraft with respect to the air, this being calculated from the static and total pressures which are being monitored.

8. The method as claimed in any of the preceding claims, wherein at least one of said second data, which depend on values obtained from data sources (Si) external to the anemometric unit (2), corresponds to at least one of the following values:
- an altitude value provided by a satellite positioning system;
- a total pressure value measured by a probe associated with at least one engine of the aircraft;
- a static pressure value measured by a probe associated with at least one engine of the aircraft;
- a total temperature value measured by a probe associated with at least one engine of the aircraft;
- a velocity value provided by a velocity estimation means;
- a static pressure value measured by a multifunctional probe;
- a static pressure value measured by a standby instrument; and
- a total pressure value measured by a standby instrument.

9. The method as claimed in any of the preceding claims, wherein the following differences are calculated in step c) in order to monitor the static pressure calculated by the anemometric unit (2):
- the difference between a barometric altitude, calculated from said static pressure being monitored, and an altitude value provided by a satellite positioning system;
- the difference between a barometric altitude, calculated from said static pressure being monitored, and an altitude calculated from a static pressure value measured by a standby instrument;
- the difference between said static pressure being monitored and a static pressure value measured by a probe associated with an engine of the aircraft;
- the difference between said static pressure being monitored and a static pressure value measured by a multifunctional probe; and
- the difference between a velocity of the aircraft with respect to the air, calculated from said static pressure being monitored, and a velocity value provided by a velocity estimation means.

10. The method as claimed in any of the preceding claims, wherein the following differences are calculated in step c) in order to monitor the total pressure calculated by the anemometric unit (2):
- the difference between said total pressure being monitored and a total pressure value measured by a probe associated with an engine of the aircraft;
- the difference between a velocity of the aircraft with respect to the air, calculated from said total pressure being monitored, and a velocity value provided by a velocity estimation means; and
- the difference between a velocity of the aircraft with respect to the air, calculated from said total pressure being monitored, and a velocity calculated from a total pressure value measured by a standby instrument.

11. The method as claimed in any of the preceding claims, wherein the following differences are calculated in step c) in order to monitor the total temperature calculated by the anemometric unit (2) :
- the difference between a barometric altitude, corrected with the aid of said total temperature being monitored, and an altitude value provided by a satellite positioning system;
- the difference between said total temperature being monitored and a total temperature value measured by a probe associated with an engine of the aircraft; and
- the difference between a velocity of the aircraft with respect to the air, calculated from said total temperature being monitored, and a velocity value provided by a velocity estimation means.

12. The method as claimed in claims 1 to 11 for an aircraft provided with q engines, q being an integer greater than or equal to 3, wherein the values measured by probes associated with said q engines are taken into account and the corresponding differences are calculated, and wherein a difference is considered to be abnormal only if it is abnormal with respect to the measured values relating to at least three of said q engines.

13. The method as claimed in claims 1 to 11 for an aircraft provided with two engines, wherein the values measured by probes associated with said two engines are taken into account and the corresponding differences are calculated, wherein the differences with respect to the measured values relating to said two engines are considered in each case, and wherein said differences are no longer taken into account in the event of a malfunction by one of said two engines.

14. The method as claimed in any of the preceding claims, wherein the monitoring of the validity of said parameter is disabled when the aircraft is in at least one particular flight phase.

15. A device for monitoring the validity of at least one parameter which is calculated by an anemometric unit (2) of an aircraft, said device (1) allowing at least one of the following parameters calculated by the anemometric unit (2) to be monitored:
the total pressure, the static pressure, and the total temperature, said device (1)which includes:
- means (13) for taking into account at least a number n of first data, each dependent on said parameter which is being monitored, n being an integer greater than or equal to 1;
- means (15) for taking into account a plurality of p second data, p being an integer greater than or equal to 2, each of said p second data being of the same type as one of said n first data and dependent on at least one value obtained from at least one data source (Si) which is external to said anemometric unit (2), the various data sources (Si) furthermore being separate from one another;
- means (18) for calculating, for each of said p second data, a difference between this second datum and a first datum of the same type, two data being of the same type if they relate to the same quantity and are expressed in the same units;
- means (21) for comparing the absolute value of each of the differences calculated in this way with a predetermined threshold value, dependent on the data type corresponding to said difference; and
- means (23) for deducing from said comparisons:
. that said parameter is invalid if the absolute values of at least two of said various differences are greater than the corresponding predetermined threshold values; and
. that said parameter is valid otherwise.

16. Device as claimed in claim 15, wherein said device furthermore includes a disabling mean (28) in order to automatically disable the monitoring of the validity of said parameter when the aircraft is in at least one particular flight phase.

17. A system for monitoring the validity of at least one parameter which is calculated by an anemometric unit (2) of an aircraft, which includes at least:
- the device (1) specified in one the claims 15 and 16;
- said anemometric unit (2); and
- said set (16) of data sources (Si) external to said anemometric unit (2).

18. An aircraft, which comprises a device (1) as specified in the claims 15 and 16.

19. An aircraft, which comprises a system (10) as specified in claim 17.
